# EUROPÄISCHE PATENTSCHRIFT

(11) **EP 1 810 103 B1**
(45) Veröffentlichungstag und Bekanntmachung des Hinweises auf die Patenterteilung: **25.03.2009**
(21) Anmeldenummer: 05857341.1
(22) Anmeldetag: 09.11.2005
(51) Int. Cl.: G05D 7/01, G05D 16/10, F16K 47/00

(54) **VORRICHTUNG ZUR DYNAMISCHEN REGELUNG EINES WASSERFLUSSES**
DEVICE FOR DYNAMICALLY CONTROLLING A WATER FLOW
DISPOSITIF DE REGULATION DYNAMIQUE D'UN ECOULEMENT D'EAU

(30) Priorität: 09.11.2004 IT TO20040774
(43) Veröffentlichungstag der Anmeldung: 25.07.2007
(73) Patentinhaber: MASCO CORPORATION OF INDIANA, Indianapolis, IN 46280 (US)
(72) Erfinder: KNAPP, Alfons, 88400 Biberach (DE)
(74) Vertreter: Knapp, Thomas
(86) Internationale Anmeldenummer: PCT/IB2005/003356
(87) Internationale Veröffentlichungsnummer: WO 2006/092655

(56) Entgegenhaltungen:
- EP-A- 1 214 634
- WO-A-01/04714
- US-A- 5 240 036

## Beschreibung

Die vorliegende Erfindung betrifft eine Vorrichtung zur dynamischen Regelung eines Wasserflusses, wie sie eingesetzt wird, um die Funktionsweise eines thermostatischen Mischers zu stabilisieren.

Die thermostatischen Mischer, die dafür geeignet sind, einen großen Durchfluss zu bewältigen, funktionieren regelmäßig dann nicht, wenn der Durchfluss, der von ihnen angefordert wird, viel kleiner als der maximale Durchfluss ist, für den sie ausgelegt sind, wie es beispielsweise auftritt, wenn ein zum Versorgen einer Anlage mit mehreren Duschen geeigneter thermostatischer Mischer zum Versorgen einer einzigen Dusche verwendet wird. Unter diesen Umständen verlieren die thermostatischen Mischer ihre Stabilität und geraten in Schwingung, so dass der von ihnen abgeleitete Wasserfluss ständigen Änderungen des Verhältnisses der Mischung zwischen kaltem Wasser und warmem Wasser unterliegt und somit Temperaturschwankungen erleidet, die für den Benutzer unangenehm sind und gefährlich werden können. Dieser Nachteil kann dadurch behoben werden, dass dem dem thermostatischen Mischer zugeführten Fluss des kalten Wassers ein Widerstand entgegengesetzt wird, wenn kleine Durchflüsse von Mischwasser gefördert werden sollen, und dieser Widerstand unterdrückt oder reduziert wird, wenn große Durchflüsse von Mischwasser gefördert werden sollen. Dieser Vorgang wird automatisch von Vorrichtungen zur dynamischen Regelung des Flusses ausgeführt, bei denen vorgesehen ist, den dem ankommenden kalten Wasser zur Verfügung gestellten Durchgangsquerschnitt zu reduzieren, wenn der aufgenommene Durchfluss reduziert ist, und einen größeren Durchgangsquerschnitt wiederherzustellen, wenn ein größerer Durchfluss angefordert wird. Dennoch besitzen die bekannten Vorrichtungen zur dynamischen Regelung des Flusses im allgemeinen den Nachteil, dass sie einen Kolben aufweisen, auf den in einer Richtung der Druck des ankommenden Wassers und in der entgegengesetzten Richtung eine Rückholfeder wirkt. Die Last der Feder muss daher abhängig vom Zulaufdruck des kalten Wassers eingestellt werden. Dies bringt es mit sich, dass einerseits für eine korrekte Funktionsweise die Vorrichtung bei ihrer Installation an die in der Anlage vorhandenen Druckbedingungen angepasst werden muss und dass andererseits die Funktionsweise der Vorrichtung nicht mehr regulär ist, wenn beträchtliche Variationen im Zulaufdruck des kalten Wassers auftreten.

Die EP 1 214 634 A0 offenbart eine Vorrichtung zur dynamischen Regelung eines Wasserflusses mit einem hülsenartigen Kolben, in dessen Boden Öffnungen vorhanden sind. In einer geöffneten Stellung des Kolbens gibt dieser eine zusätzliche Durchflussmöglichkeit frei.

Hauptaufgabe der vorliegenden Erfindung ist es, eine Vorrichtung zur dynamischen Regelung eines Flusses zu schaffen, deren Funktionieren in weiten Bereichen unabhängig vom Zulaufdruck sein muss, so dass die Vorrichtung bei der Durchführung ihrer Installation keine Einstellungen erfordern darf und selbst dann nicht irregulär funktionieren darf, wenn beträchtliche Variationen des Zulaufdrucks auftreten.

Eine weitere Aufgabe der vorliegenden Erfindung besteht darin, eine derartige Vorrichtung zur dynamischen Regelung des Flusses zu schaffen, die von einfacher Konstruktion und kostengünstig ist sowie eine große Zuverlässigkeit und eine lange Lebensdauer gewährleistet.

Diese Aufgaben werden erfindungsgemäß gelöst mit einer Vorrichtung zur dynamischen Regelung eines Flusses, umfassend in einem Körper eine Zulaufkammer, eine Ablaufkammer, einen Kolben, der zwischen der Zulaufkammer und der Ablaufkammer angeordnet und auf einer Seite dem Druck der Zulaufkammer und auf der anderen Seite dem Druck der Ablaufkammer ausgesetzt ist, wobei dieser Kolben beweglich ist zwischen einer ersten Position, die zur Zulaufkammer hin verschoben ist, wobei der Kolben in der ersten Position den Fluss zwischen der Zulaufkammer und der Ablaufkammer verengt, und einer zweiten Position, die zur Ablaufkammer hin verschoben ist, wobei der Kolben in der zweiten Position den Fluss zwischen der Zulaufkammer und der Ablaufkammer nicht verengt, und eine Rückholfeder, die den Kolben zur ersten Position hin beaufschlagt, dadurch gekennzeichnet, dass dieser Kolben von einem Durchgang durchsetzt ist, der sich von der Zulaufkammer zur Ablaufkammer hin erstreckt, dass ein Durchflussbegrenzungsmittel in Form eines Durchflussmengenreglers zum Begrenzen des den Durchgang durchlaufenden Flusses vorgesehen ist, und dass die Rückholfeder so dimensioniert ist, dass ihre Wirkung im Wesentlichen der Kraft entspricht, die dazu neigt, den Kolben aus der ersten Position in die zweite Position zu verschieben, wenn der von dem Durchflussbegrenzungsmittel zugelassene maximale Fluss abgeleitet wird.

Auf diese Weise setzt, solange die Vorrichtung von einem Fluss mit einem Durchsatz durchquert wird, der nicht größer als die von dem Durchflussbegrenzungsmittel gesetzte Grenze ist, dieses Mittel dem Durchfluss des angeforderten Durchsatzes, der den den Kolben durchsetzenden Durchgang durchläuft, einen reduzierten Widerstand entgegen; der Druck in der Ablaufkammer bleibt unterhalb des in der Zulaufkammer herrschenden Drucks, jedoch in dessen Nähe, und die Kraft der Rückholfeder, die zweckmäßigerweise für eine schwache Wirkung dimensioniert ist, hält den Kolben in seiner ersten Position. Wenn jedoch ein über der durch das Durchflussbegrenzungsmittel gesetzten Grenze liegender Durchfluss angefordert wird, kann dieser Durchfluss nicht durch den den Kolben durchsetzenden Durchgang fließen, und der Druck in der Ablaufkammer wird weiter reduziert. Dann überwinden der Kolben, der der Differenz zwischen dem in der Zulaufkammer herrschenden Druck und dem in der Ablaufkammer herrschenden, nun weiter reduzierten Druck ausgesetzt ist, die schwache Kraft der Rückholfeder und verlagert sich in seine zweite Position, wodurch der Durchgang des Flusses von der Zulaufkammer zur Ablaufkammer freigegeben wird.

Es reicht aus, dass das Durchflussbegrenzungsmittel so gewählt wird, dass der von ihm dem Fluss entgegengesetzte Widerstand ausreicht, um ein korrektes Funktionieren des so versorgten thermostatischen Mischerhahns bei geringen Durchflüssen zu gewährleisten, und dass die Rückholfeder so ausgewählt wird, dass sie eine schwache Kraft ausübt, die der kleinen Druckdifferenz entspricht, die sich zwischen der Zulaufkammer und der Ablaufkammer ausbildet, wenn der vom Durchflussbegrenzungsmittel zugelassene maximale Durchfluss abgeleitet wird, damit der in den thermostatischen Mischerhahn geschickte Fluss gebremst wird, so lange der abgeleitete Durchfluss niedrig ist, und freigegeben wird, wenn ein höherer Durchfluss angefordert wird, wodurch die Stabilität des thermostatischen Mischers gewährleistet wird.

Da dasjenige, das die Verschiebung des Kolbens steuert bzw. regelt, nicht der in den Kammern der Vorrichtung herrschende Absolutdruck, sondern die Druckdifferenz zwischen der Zulaufkammer und der Ablaufkammer ist, die von dem Fluss und den sich diesem widersetzenden Widerständen abhängt, aber nicht von dem Absolutdruck, ist das Funktionieren der Vorrichtung in großem Umfang unabhängig von dem Zulaufdruck, und die Vorrichtung wiederum erfordert beim Vorgang ihrer Installation keinerlei Anpassung und zeigt keine Unregelmäßigkeit des Funktionierens, selbst wenn der Zulaufdruck erheblich variiert.

Das in der erfindungsgemäßen Vorrichtung verwendete Durchflussbegrenzungsmittel ist ein in der Technik bekanntes Ventil, das zu geringen Kosten handelsüblich erhältlich ist und das beispielsweise in verschiedenen Formen in den Patentveröffentlichungen DE 40 41 116, DE 102 20 287, DE 102 28 490 und WO 01/04714 beschrieben ist. Dieses Ventil stellt dem Fluss einen Durchgang mit reduziertem Widerstand zur Verfügung, solange die Durchflussmenge des Flusses eine durch die Konstruktion des Durchflussbegrenzungsmittels voreingestellte Grenze nicht überschreitet, während das Ventil, wenn der Fluss dazu tendiert, diese Grenze zu überschreiten, dem Fluss einen größeren Widerstand so entgegengesetzt, dass der Durchfluss auf den maximal zulässigen Wert begrenzt wird. Ventile dieser Art werden oft in Einrichtungen eingebaut, wie beispielsweise Duschen, bei denen, in bestimmten Fällen auch aus gesetzlichen Gründen, der Verbrauch begrenzt sein muss. Diese Ventile sind für viele Grenzwerte für den Durchfluss erhältlich, und somit ist eine angemessene Auswahl des Durchflussbegrenzungsmittels sowie eine entsprechende Proportionierung der Rückholfeder ausreichend, um erfindungsgemäß eine Durchflussregelvorrichtung zu schaffen, die an die Notwendigkeiten verschiedener spezifischer Anwendungen angepasst ist.

Vorzugsweise ist der Kolben verschieblich mit einem ersten Ende in der Zulaufkammer und mit seinem zweiten Ende in einem am Körper der Vorrichtung befestigten Zylinder angebracht, steht in Verbindung mit der Ablaufkammer und ist bezüglich der Zulaufkammer ausgerichtet.

Vorzugsweise ist das Durchflussbegrenzungsmittel in dem Zylinder angebracht.

Die Rückholfeder kann in dem Zylinder angebracht sein und gegen das zweite Ende des Kolbens wirken, oder sie kann zwischen dem Boden des Körpers der Vorrichtung und einer Schulter des Kolbens wirken. Im letztgenannten Fall kann die Rückholfeder außerhalb des Zylinders angebracht sein, in dem das zweite Ende des Kolbens läuft.

Vorzugsweise weist der Kolben einen Flansch auf, der in einen Sitz des Körpers der Vorrichtung eingreift, wenn sich der Kolben in seiner ersten Position befindet, und der sich von diesem löst, wenn sich der Kolben in seiner zweiten Position befindet. Auf diese Weise gibt der Flansch den Durchgang für den Fluss in großem Umfang frei, wenn sich der Kolben in seine zweite Position verlagert, und erfährt dann seitens des Flusses eine Mitnahmewirkung, die dazu neigt, den Kolben in seiner zweiten Position zu halten. Auf diese Weise wird die Position des Kolbens stabilisiert. Die Position dieses Flansches bezüglich des Kolbens kann schließlich einstellbar sein.

Diese und weitere Charakteristika, Aufgaben und Vorteile des Gegenstands der vorliegenden Erfindung gehen besser aus der folgenden Beschreibung einiger Ausführungsformen unter Bezug auf die begleitenden Zeichnungen hervor, die nicht beschränkende Beispiele darstellen, von denen:
Fig. 1 in Axialschnitt eine Vorrichtung zur dynamischen Regelung eines Flusses gemäß einer ersten Ausführungsform der vorliegenden Erfindung im Zustand der Ruhe oder einem Ablauf mit reduziertem Fluss darstellt.
Fig. 2 die gleiche Vorrichtung der Fig. 1 im Zustand des Ablaufs mit erhöhtem Fluss darstellt.
Fig. 3 analog zu Fig. 1 eine zweite Ausführungsform der erfindungsgemäßen Vorrichtung darstellt.
Fig. 4 analog zu Fig. 2 eine dritte Ausführungsform der erfindungsgemäßen Vorrichtung darstellt.

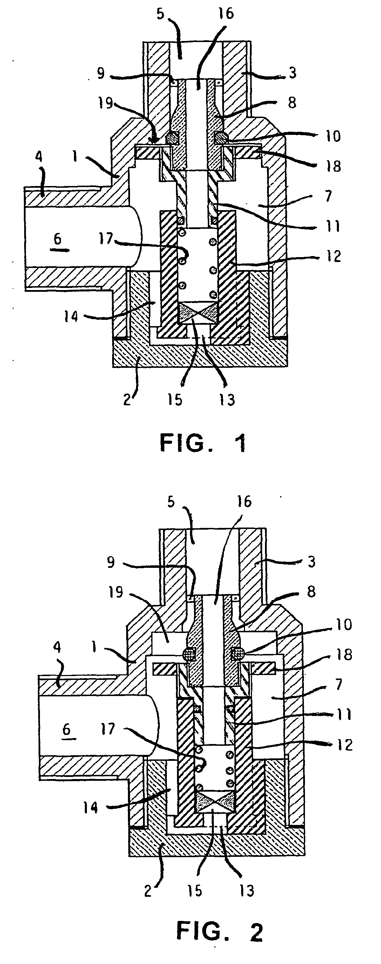

In den Fig. 1 und 2 ist in Axialschnitt eine Vorrichtung für die dynamische Regelung eines Wasserflusses von dem Typ dargestellt, wie er zur Stabilisierung der Funktionsweise eines thermostatischen Mischers verwendet wird, der einen Körper 1 umfasst, der in diesem Fall unten von einer Endscheibe 2 verschlossen und mit einem Zulaufanschluss 3 sowie einem Ablaufanschluss 4 versehen ist. Der Zulaufanschluss 3 bildet in seinem Inneren eine Zulaufkammer 5, und der Ablaufanschluss 4 bildet in seinem Inneren einen Ablaufdurchgang 6, der mit einer Ablaufkammer 7 in Verbindung steht, die den Innenraum des Körpers 1 einnimmt.

In der Zulaufkammer 5 ist verschieblich ein erstes Ende eines Kolbens 8 montiert, der von einem Kragen 9 geführt ist, der von Umfangsdurchgängen durchbrochen ist, die einem Fluss einen Durchgang um den Kolben 8 herum ermöglichen. Der Kragen 9 begrenzt das erste Ende des Kolbens 8. In seiner in Fig. 1 dargestellten Ruheposition (erste Position oder Schließposition) dichtet der Kolben 8 mittels einer ringförmigen Dichtung 10 gegenüber der Zulaufkammer 5 ab und widersetzt sich dem Durchfluss des Flusses von der Zulaufkammer 5 zur Ablaufkammer 7.

Der Kolben 8 ist auf der von dem Kragen 9 abgewandten Seite durch ein Element 11 verlängert, welches das zweite Ende des Kolbens 8 bildet und das in dieser Ausführungsform ein an dem Kolben 8 gesondert angebrachtes Element darstellt. Der Kolben 8 und sein zweites Ende 11 sind von einem axialen Durchgang 16 durchsetzt. Es ist klar, dass der Kolben 8 auf einer Seite dem Druck ausgesetzt ist, der in der Zulaufkammer 5 herrscht, der dazu neigt, ihn aus dieser Kammer hinauszudrücken, und auf der anderen Seite dem Druck, der in der Ablaufkammer 7 herrscht, der dazu neigt, den Kolben zur Zulaufkammer 5 hin zu drücken.

In dem Körper 1, und bei dieser Ausführungsform genauer gesagt auf der jeweiligen Endscheibe 2, ist ein fester Zylinder 12 montiert, der über Durchgänge 13 und 14 mit der Ablaufkammer 7 in Verbindung steht. In dem Zylinder 12 ist das zweite Ende 11 des Kolbens 8 verschieblich und in ihm geführt. Innerhalb des Zylinders 12 ist ein Durchflussbegrenzungsmittel 15 montiert.

In dem Zylinder 12 ist eine Rückholfeder 17 angebracht, die zwischen einem mit dem Körper 1 fest verbundenen Teil, in diesem Fall das Durchflussbegrenzungsmittel 15, und dem zweiten Ende 11 des Kolbens 8 so wirkt, dass von der Rückholfeder 17 eine elastische Beaufschlagung auf den Kolben selbst ausgeübt wird, der ihn zur Zulaufkammer 5 hin drückt und außerdem dazu neigt, ihn in seiner in Fig. 1 dargestellten ersten Schließposition zu halten oder ihn dorthin zu bringen. Diese Rückholfeder ist so dimensioniert, dass ihre Wirkung im Wesentlichen der relativ schwachen Kraft entspricht, die dazu neigt, den Kolben aus der ersten Position in die zweite Position zu verschieben, wenn der vom Durchflussbegrenzungsmittel zugelassene maximale Fluss abgeleitet wird.

Wenn unter diesen Umständen vom Ablaufanschluss 4 ein kleiner Durchfluss angefordert wird, der nicht über dem vom Durchflussbegrenzungsmittel 15 zugelassenen maximalen Durchfluss liegt, stellt sich ein von der Zulaufkammer 5 ausgehender Fluss durch den Durchgang 16, den Zylinder 12, das Durchflussbegrenzungsmittel 15, die Durchgänge 13 und 14 bis zur Ablaufkammer 7 und somit zum Ablaufdurchgang 6 ein. Da das Durchflussbegrenzungsmittel 15, solange es von einem Fluss durchquert wird, der seine Durchflussgrenze nicht überschreitet, dem Fluss einen reduzierten Widerstand entgegengesetzt, liegt der sich in der Ablaufkammer 7 ausbildende Druck nahe bei dem in der Zulaufkammer 5 herrschenden Druck. Auf den Kolben 8 wirkt somit eine kleine Druckdifferenz, die von der Rückholfeder 17 überkompensiert wird, die in oben beschriebener Weise dimensioniert ist, so dass der Kolben 8, auch wenn sich die Vorrichtung in diesem Zustand eines Ablaufs mit geringem Durchfluss befindet, in seiner in Fig. 1 dargestellten ersten Schließposition bleibt.

Wenn jedoch vom Ablaufanschluss 4 ein Durchfluss angefordert wird, der größer als derjenige ist, den das Durchflussbegrenzungsmittel 15 passieren lässt, wird der Druck in der Ablaufkammer 7 beträchtlich reduziert, und die auf den Kolben 8 wirkende Druckdifferenz übersteigt die Kraft der Rückholfeder 17. Dann verschiebt sich der Kolben 8 in die in Fig. 2 dargestellte zweite Öffnungsposition. Die Dichtung 10 hört auf, eine Abdichtung zur Zulaufkammer 5 zu bilden, und der Durchgang des Flusses von der Zulaufkammer 5 zur Ablaufkammer 7 wird im Wesentlichen frei.

Wenn danach der angeforderte Durchfluss von neuem reduziert oder ganz abgeschaltet wird, übersteigt die Wirkung der Rückholfeder 17 wieder die auf den Kolben 8 wirkende Druckdifferenz, und dieser bewegt sich von neuem in seine erste Schließposition gemäß Fig. 1.

Vorzugsweise ist mit dem das zweite Ende des Kolbens 8 bildenden Element 11 ein Flansch 18 verbunden, der in der in Fig. 1 dargestellten ersten Position des Kolbens 8 in einen im Körper 1 ausgebildeten Sitz 19 eingreift, während sich der Flansch 18 in der in Fig. 2 dargestellten zweiten Position des Kolbens 8 von dem Sitz 19 löst. Wenn sich der Flansch 18 in dieser zweiten Position befindet, lässt er viel freien Platz für den Fluss und erfährt von dem Fluss eine Mitnahmewirkung, die sich der Wirkung der Rückholfeder 17 entgegengesetzt. Die Wirkung des Flansches 18 wiederum neigt dazu, die zweite Position des Kolbens 8 zu stabilisieren.

Es kann angezeigt sein, dass der Flansch 18, wie es für die eben beschriebene Ausführungsform dargestellt ist, auf das Element 11 aufgeschraubt ist, so dass seine axiale Position bezüglich des Kolbens 8 eingestellt werden kann. Auf diese Weise kann der Grad der Stabilität der Vorrichtung eingestellt werden.

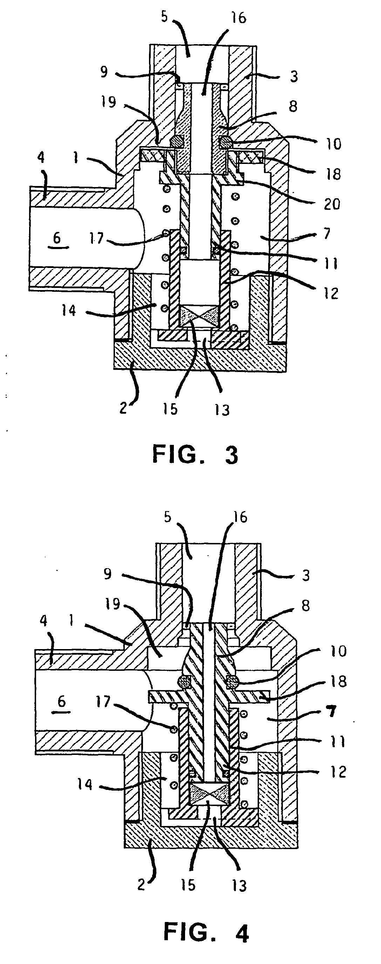

Die Fig. 3 und 4 stellen zwei weitere Ausführungsformen der erfindungsgemäßen Vorrichtung dar. Bei diesen sind die Teile, die gleich wie die Teile der ersten Ausführungsform sind oder diesen entsprechen, mit den gleichen Bezugszahlen bezeichnet.

Die Ausführungsform gemäß Fig. 3 unterscheidet sich von der zuvor beschriebenen Ausführungsform nur durch die Tatsache, dass die Rückholfeder 17, anstatt in den Zylinder 12 eingeführt zu werden und gegen das zweite Ende 11 des Kolbens 8 zu wirken, um den Zylinder 12 herum angeordnet ist und gegen die Endscheibe 2 des Körpers 1 und eine Schulter 20 des Kolbens wirkt.

Auch bei der Ausführungsform gemäß Fig. 4 ist die Rückholfeder 17 um den Zylinder 12 herum angeordnet, aber in diesem Fall wirkt sie gegen die Endscheibe 2 des Körpers 1 und den Flansch 18 des Zylinders 8. Außerdem zeigt die Fig. 4, wie zur Vereinfachung der Konstruktion der Zylinder 8, das Element 11, das sein zweites Ende bildet, und der Flansch 18 aus einem einzigen Stück gebildet werden können.

Wie aus dem Vorstehenden hervorgeht, ermöglicht die Erfindung die Realisierung einer Vorrichtung zur dynamischen Regelung eines Wasserflusses, die praktisch nicht gegenüber Variationen des Zulaufdrucks des kalten Wassers empfindlich ist, dessen Fluss sie regelt, um diesen in einen thermostatischen Mischer zu schicken, um dessen Funktionsweise zu stabilisieren. Demzufolge ist es nicht mehr erforderlich, die Last der Rückholfeder abhängig von dem in der Anlage vorhandenen Zulaufdruck einzustellen, und es ist selbst dann keinerlei Defekt des Funktionierens der Vorrichtung mehr zu beobachten, wenn sich aus irgendwelchen Gründen dieser Zulaufdruck in größerem Ausmaß ändert. Die Vorrichtung kann so realisiert werden, dass sie verschiedene Anforderungen der Installation erfüllt, indem einfach ein geeignetes Durchflussbegrenzungsmittel ausgewählt und entsprechend die Rückholfeder dimensioniert wird. Ihre Konstruktion ist relativ einfach und kostengünstig.

Es ist festzuhalten, das die Erfindung nicht auf die beschriebenen und als Beispiele dargestellten Ausführungsformen beschränkt ist. Es sind verschiedenste Modifikationen beschrieben worden, und weitere gehören zum Können eines Fachmanns. Beispielsweise könnte das Durchflussbegrenzungsmittel in dem Kolben montiert werden, und der feste Zylinder könnte weggelassen werden und durch ein anderes Führungsmittel für den Kolben ersetzt werden.

## Patentansprüche

1. Vorrichtung zur dynamischen Regelung eines Flusses, umfassend, in einem Körper (1), eine Zulaufkammer (5), eine Ablaufkammer (7), einen Kolben (8), der zwischen der Zulaufkammer (5) und der Ablaufkammer (7) angeordnet und auf einer Seite dem Druck der Zulaufkammer (5) und auf der anderen Seite dem Druck der Ablaufkammer (7) ausgesetzt ist, wobei dieser Kolben (8) beweglich ist zwischen einer ersten Position, die zur Zulaufkammer (5) hin verschoben ist, wobei der Kolben (8) in der ersten Position den Fluss zwischen der Zulaufkammer (5) und der Ablaufkammer (7) verengt, und einer zweiten Position, die zur Ablaufkammer (7) hin verschoben ist, wobei der Kolben (8) in der zweiten Position den Fluss zwischen der Zulaufkammer (5) und der Ablaufkammer (7) nicht verengt, und eine Rückholfeder (17), die den Kolben (8) zur ersten Position hin beaufschlagt, **dadurch gekennzeichnet, dass** dieser Kolben (8) von einem Durchgang (16) durchsetzt ist, der sich von der Zulaufkammer (5) zur Ablaufkammer (7) hin erstreckt, dass ein Durchflussbegrenzungsmittel (15) in Form eines Durchflussmengenreglers zum Begrenzen des den Durchgang (16) durchlaufenden Flusses vorgesehen ist, und dass die Rückholfeder (17) so dimensioniert ist, dass ihre Wirkung im Wesentlichen der Kraft entspricht, die dazu neigt, den Kolben (8) aus der ersten Position in die zweite Position zu verschieben, wenn der von dem Durchflussbegrenzungsmittel (15) zugelassene maximale Fluss abgeleitet wird.

2. Vorrichtung zur dynamischen Regelung eines Flusses nach Anspruch 1, **dadurch gekennzeichnet, dass** der Kolben (8) verschieblich mit seinem ersten Ende (9) in der Zulaufkammer (5) und mit seinem zweiten Ende (11) in einem am Körper (1) der Vorrichtung befestigten Zylinder (12) angeordnet ist, der in Verbindung mit der Ablaufkammer (7) steht und bezüglich der Zulaufkammer (5) ausgerichtet ist.

3. Vorrichtung zur dynamischen Regelung eines Flusses nach Anspruch 2, **dadurch gekennzeichnet, dass** das Durchflussbegrenzungsmittel (15) in dem festen Zylinder (12) angebracht ist.

4. Vorrichtung zur dynamischen Regelung eines Flusses nach Anspruch 2, **dadurch gekennzeichnet, dass** die Rückholfeder (17) im Inneren des festen Zylinders (12) angebracht ist und gegen das zweite Ende (11) des Kolbens (8) wirkt.

5. Vorrichtung zur dynamischen Regelung eines Flusses nach Anspruch 2, **dadurch gekennzeichnet, dass** die Rückholfeder (17) außerhalb des festen Zylinders (12) angebracht ist und zwischen einem an dem Körper (1) der Vorrichtung befestigten Teil und einem mit dem Kolben (8) verbundenen Teil wirkt.

6. Vorrichtung zur dynamischen Regelung eines Flusses nach Anspruch 1, **dadurch gekennzeichnet, dass** der Kolben (8)einen Flansch (18) aufweist, der in einen Sitz des Körpers (1) der Vorrichtung eingreift, wenn sich der Kolben (8) in seiner ersten Position befindet, und der sich von jenem löst, wenn sich der Kolben (8) in seiner zweiten Position befindet.

7. Vorrichtung zur dynamischen Regelung eines Flusses nach Anspruch 6, **dadurch gekennzeichnet, dass** die Position des Flansches (18) bezüglich des Kolbens (8) einstellbar ist.

8. Vorrichtung zur dynamischen Regelung eines Flusses nach Anspruch 1, **gekennzeichnet durch** seinen Einbau in Serie in den Kaltwasserzulauf eines thermostatischen Mischers zu dessen Stabilisierung.

## Claims

1. Device for dynamic flow regulation comprising in one body (1) a feed chamber (5), a discharge chamber (7), a piston (8) which is disposed between the feed chamber (5) and the discharge chamber (7) and which is subjected on one side to the pressure of the feed chamber (5) and on the other side to the pressure of the discharge chamber (7), the piston (8) being displaceable between a first position, which is offset towards the feed chamber (5), the piston (8) constricting the flow between the feed chamber (5) and discharge chamber (7) in the first position, and a second position, which is offset towards the discharge chamber (7), the piston (8) not constricting the flow between the feed chamber (5) and the discharge chamber (7) in the second position, and a recuperating spring (17) which acts on the piston (8) in the direction of the first position, **characterised in that** this piston (8) is penetrated by a passage (16) extending from the feed chamber (5) to the discharge chamber (7), **in that** a flow-limiting means (15) in the form of a flow regulator is provided for limiting the flow passing through the passage (16), and **in that** the recuperating spring (17) is dimensioned in such a way that its effect substantially corresponds to the force which tends to displace the piston (8) from the first position into the second position when the maximum flow allowed by the flow limiting means (15) is withdrawn.

2. Device for dynamic flow regulation according to claim 1, **characterised in that** the piston (8) is disposed displaceably with its first end (9) inside the feed chamber (5) and with its second end (11) inside a cylinder (12) which is attached to the device body (1) is connected to the discharge chamber (7) and is aligned in relation to the feed chamber (5).

3. Device for dynamic flow regulation according to claim 2, **characterised in that** the flow limiting means (15) is mounted inside the fixed cylinder (12).

4. Device for dynamic flow regulation according to claim 2, **characterised in that** the recuperating spring (17) is mounted on the inside of the fixed cylinder (12) and acts against the second end (11) of the piston (8).

5. Device for dynamic flow regulation according to claim 2, **characterised in that** the recuperating spring (17) is mounted outside the fixed cylinder (12) and acts between a part attached to the body (1) of the device and a part connected to the piston (8).

6. Device for dynamic flow regulation according to claim 1, **characterised in that** the piston (8) comprises a flange (18), which engages in a socket in the body (1) when the piston (8) is in its first position and which disengages therefrom when the piston (8) is in its second position.

7. Device for dynamic flow regulation according to claim 6, **characterised in that** the position of the flange (18) relative to the piston (8) may be adjusted.

8. Device for dynamic flow regulation according to claim 1, **characterised by** the serial installation of the device in the cold water inflow of a thermostatic mixer for stabilisation thereof.

## Revendications

1. Dispositif pour la régulation dynamique d'un écoulement, comprenant à l'intérieur d'un corps (1) une chambre d'alimentation (5), une chambre d'évacuation (7), un piston (8) qui est disposé entre la chambre d'alimentation (5) et la chambre d'évacuation (7) et est exposé d'un côté à la pression de la chambre d'alimentation (5) et de l'autre côté à la pression de la chambre d'évacuation (7), dans lequel ce piston (8) est mobile entre une première position qui est décalée en direction de la chambre d'alimentation (5), dans lequel le piston (8) dans la première position rétrécit l'écoulement entre la chambre d'alimentation (5) et la chambre d'évacuation (7), et une deuxième position qui est décalée en direction de la chambre d'évacuation (7), dans lequel le piston (8) dans la deuxième position ne rétrécit pas l'écoulement entre la chambre d'alimentation (5) et la chambre d'évacuation (7), et un ressort de rappel (17) qui sollicite le piston (8) vers la première position, **caractérisé en ce que** ce piston (8) est traversé par un passage (16) qui s'étend de la chambre d'alimentation (5) à la chambre d'évacuation (7), **en ce que** des moyens de limitation de passage (15) sous la forme d'un régulateur de débit de passage sont prévus pour limiter l'écoulement passant par le passage (16), et **en ce que** le ressort de rappel (17) est dimensionné de telle sorte que son effet correspond substantiellement à la force qui a tendance à déplacer le piston (8) de la première position à la deuxième position, lorsque l'écoulement maximal admis par les moyens de limitation de passage (15) est dérivé.

2. Dispositif pour la régulation dynamique d'un écoulement selon la revendication 1, **caractérisé en ce que** le piston (8) est disposé de façon mobile avec sa première extrémité (9) dans la chambre d'alimentation (5) et avec sa deuxième extrémité (11) dans un cylindre (12) fixé sur le corps (1) du dispositif et qui communique avec la chambre d'évacuation (7) et est orienté par rapport à la chambre d'alimentation (5).

3. Dispositif pour la régulation dynamique d'un écoulement selon la revendication 2, **caractérisé en ce que** les moyens de limitation de passage (15) sont installés dans le cylindre fixe (12).

4. Dispositif pour la régulation dynamique d'un écoulement selon la revendication 2, **caractérisé en ce que** le ressort de rappel (17) est installé à l'intérieur du cylindre fixe (12) et agit contre la deuxième extrémité (11) du piston (8).

5. Dispositif pour la régulation dynamique d'un écoulement selon la revendication 2, **caractérisé en ce que** le ressort de rappel (17) est installé en dehors du cylindre fixe (12) et agit entre une partie fixée sur le corps (1) du dispositif et une partie reliée au piston (8).

6. Dispositif pour la régulation dynamique d'un écoulement selon la revendication 1, **caractérisé en ce que** le piston (8) présente une bride (18) qui s'engage dans un siège du corps (1) du dispositif lorsque le piston (8) se trouve dans sa première position, et qui s'en détache lorsque le piston (8) se trouve dans sa deuxième position.

7. Dispositif pour la régulation dynamique d'un écoulement selon la revendication 6, **caractérisé en ce que** la position de la bride (18) est réglable par rapport au piston (8).

8. Dispositif pour la régulation dynamique d'un écoulement selon la revendication 1, **caractérisé par** son installation en série dans l'alimentation en eau froide d'un mélangeur thermostatique en vue de la stabilisation de celui-ci.
